# EUROPÄISCHE PATENTSCHRIFT

(11) **EP 2 582 479 B1**
(45) Veröffentlichungstag und Bekanntmachung des Hinweises auf die Patenterteilung: **20.02.2019**
(21) Anmeldenummer: 11727677.4
(22) Anmeldetag: 20.06.2011
(51) Int. Cl.: B23D 31/04, B23D 35/00

(54) **VERFAHREN UND VORRICHTUNG ZUM BESÄUMEN VON GROBBLECHEN**
METHOD AND DEVICE FOR TRIMMING HEAVY PLATES
PROCÉDÉ ET DISPOSITIF D'ÉBAVURAGE DE TÔLES FORTES

(30) Priorität: 19.06.2010 DE 102010024403
(43) Veröffentlichungstag der Anmeldung: 24.04.2013
(73) Patentinhaber: SMS group GmbH, 40237 Düsseldorf (DE)
(72) Erfinder: BOHN, Andreas, 57271 Hilchenbach (DE); BAUR, Thomas, 57271 Hilchenbach (DE); MEINHARDT, Ulrich, 57271 Hilchenbach (DE)
(74) Vertreter: Klüppel, Walter
(86) Internationale Anmeldenummer: PCT/EP2011/060260
(87) Internationale Veröffentlichungsnummer: WO 2011/157853

(56) Entgegenhaltungen:
- US-A- 2 160 999

## Beschreibung

Die Erfindung betrifft ein Verfahren und eine Vorrichtung zum Besäumen von Grobblechen mittels Grobblechscheren, welche Besäummesser aufweisen, die eine Besäummesserebene aufspannen. Bei dem Verfahren und der Vorrichtung werden die bei der Besäumung entstehenden Schrottstreifen durch hinter den Besäummessern und quer zu diesen angeordnete Schrottmesser, die an einem in einer Schrottmesserschlittenführung gehaltenen und geführten Schrottmesserschlitten befestigt sind, in kurze Schrottstücke zerteilt.

Grobblechscheren für Grobbleche mit Besäummessern zum Besäumen des Blechrandes mit quer dazu angeordneten Schrottmessern zum Abschneiden der vom Blech bereits getrennten Saumstreifen bzw. Schrottstreifen sind allgemein bekannt.

So wird in der deutschen Offenlegungsschrift 1 907 717 eine Besäumschere für Walzbleche beschrieben, bei der das obere Quermesser (Schrottmesser) einen eigenen Antrieb hat und die Schneidkante des unteren Quermessers tiefer liegt als die Schneidkante des festen unteren Besäummessers. Das obere Quermesser ist von einem Schwenkhebel getragen, der auf einer unterhalb der Scheidkante des unteren Quermessers angeordneten, etwa parallel zu den Besäummessern verlaufenden Schwenkachse gelagert ist.

Die deutsche Auslegeschrift 2 122 855 beschreibt eine Blechschere zum Besäu-men von Blechen mit einem feststehenden Untermesserträger mit unterem Besäummesser und einem eine wiegende Bewegung ausführenden Obermesserträger mit oberen Besäummesser und einem auslaufseitig angeordneten Quermesserpaar, dessen oberes Quermesser von der wiegenden Bewegung des Obermesserträgers mit bewegt wird. Das obere Quermesser ist an einem eigenen, innerhalb von seitlichen Führungen für den Obermesserträger geradgeführten Messerschlitten angeordnet, der über einen Stößel gelenkig an das auslaufseitige Ende des Obermesserträgers angeschlossen ist.

Aus der DT 26 58 068 A1 ist eine Besäumschere mit einem unteren, an einem unteren Messerbett befestigten Besäummesser zum Schneiden der Seitenränder einer Stahlplatte, mit einem oberen mit Besäummesserhalter, der über Schubstangen derart an einem ersten und an einem zweiten Exzenter gelagert ist, dass ein am oberen Besäummesserhalter befestigtes oberes Besäummesser schwingend bewegbar ist, mit einem oberen, durch eine Schubstange an einen dritten Exzenter angeschlossenen Schopfmesser und mit einem unteren am Messerbett in Zuführ- oder Förderrichtung der Stahlplatte hinter dem Besäummesser angeordneten Schopfmesser, wobei alle Exzenter an gemeinsamer Exzenterwelle vorgesehen sind, deren Achse sich parallel zur Zuführrichtung der Stahlplatte erstreckt. Der Radius und der Winkel der Exzentrizität des dritten Exzenters ist dabei gegenüber dem Radius und dem Winkel der Exzentrizität des ersten und des zweiten Exzenters in bestimmter geeigneter Weise vorgewählt.

Den bekannten Besäumscheren mit auslaufseitigem Schrottmesserpaar ist gemeinsam, dass das bewegte obere Schrottmesser möglichst dicht an der besäumten Blechkante vorbeigeführt sein muss, um den noch am Blech hängenden Saumstreifen gegen das untere feste Schrottmesser abwärts zu drücken, was eine genaue Einstellung des oberen Schrottmessers nach jedem Messerwechsel erfordert. Ist das obere Schrottmesser werkseitig zu nah an der Saumkante des Grobblechs montiert, so kann die besäumte Blechkante beschädigt werden. Ist es hingegen zu weit entfernt montiert, so überdeckt seine Schneidkante den Saumstreifen nicht in voller Breite.

Für das Scheren und die Standzeiten der Messer ist es vorteilhaft, bei einer Erhöhung der Blechdicke die Messerspaltweite zu vergrößern. Beim Besäumschnitt wird dann die Schnittkante in Abhängigkeit des Werkstoffs des Grobblechs schräger ausgebildet als bei kleiner Messerspaltweite. Dies macht aber eine Vergrößerung des Abstandes des Schrottobermessers zum Grobblech bzw. dessen Besäumkante erforderlich, da sonst das Schrottobermesser die Schnittkante des Grobblechs beschädigt. Umgekehrt darf bei kleinen Blechdicken und geringer Messerspaltweite der Abstand nicht zu groß sein, da sonst der Schrottstreifen nicht komplett geschnitten wird.

Die Druckschrift US 2,160,999 A offenbart ein Verfahren und eine Vorrichtung zum Besäumen von Grobblechen mittels Blechscheren, wobei die Grobbleche Besäumränder aufweisen, die ihrerseits eine Besäumnisebene aufspannen. Die bei dem Besäumen entstehenden Schrottstreifen werden durch eine - in Transportrichtung des Grobblechs gesehen - hinter den Besäumrändern angeordnete Schrottmessereinrichtung mit einem Schrottobermesser und einem Schrottuntermesser in Schrottstücke zerteilt. Das Schrottobermesser und das Schrottuntermesser spannen eine Schrottmesserebene auf und der Abstand zwischen dem Schrottobermesser und/oder der Abstand zwischen dem Schrottuntermesser und der Besäummesserebene wird vor einem jeweiligen Besäumvorgang in Abhängigkeit von der Dicke der jeweils zu besäumenden Grobbleche eingestellt. Die Einstellung erfolgt durch Verschieben des Schrottobermessers und/oder des Schrottuntermessers in einer Verschieberichtung mit zumindest einer Komponente quer zu der Besäummesserebene.

Ausgehend vom geschilderten Stand der Technik ist es Aufgabe der Erfindung, ein alternatives Verfahren und eine alternative Vorrichtung anzugeben zur Besäumung von Blechen mit wechselnden Blechdicken.

Die gestellte Aufgabe wird durch den Gegenstand des Anspruchs 1 gelöst. Der Anspruch 1 ist dadurch gekennzeichnet, dass der Abstand zwischen dem Schrottobermesser und der Besäummesserebene und/oder der Abstand zwischen dem Schrottuntermesser und der Besäummesserebene vor einem jeweiligen Besäumvorgang in Abhängigkeit von der Dicke der jeweils zu besäumenden Grobbleche eingestellt wird durch Verschieben von dem Schrottobermesser und/oder dem Schrottuntermesser in einer Verschieberichtung mit zumindest einer Komponente quer zu der Besäummesserebene dass zusätzlich zu dem Abstand zwischen dem Schrottober- und/oder dem Schrottuntermesser und der Besäummesserebene auch die Schrottmesserspaltweite in Abhängigkeit von der Dicke der zu besäumenden Grobbleche eingestellt wird durch Verschieben des Schrottobermessers und/oder des Schrottuntermessers relativ zueinander in der Verschieberichtung mit einer weiteren Komponente quer zu der von den Schrottmessern aufgespannten Schrottmesserebene, dass die Verschiebungen des Schrottobermessers und/oder des Schrottuntermessers quer zur Besäummesserebene und quer zu der Schrottmesserebene gleichzeitig erfolgen; dass Schrottobermesser oder das Schrottuntermesser in einem Schlitten, welcher in einer Schrottmesserschlittenführung verschiebbar geführt ist, befestigt ist; und dass die gleichzeitige Verschiebung des Schrottobermessers und/oder des Schrottuntermessers quer zur Besäummesserebene und quer zur Schrottmesserebene durch Verdrehen von mindestens einer mit der Schrottmesserschlittenführung in Wirkverbindung stehenden Exzenterwelle erfolgt.

Im Allgemeinen ist die Verschieberichtung der Schrottmesser durch einen Verschiebevektor repräsentiert. Dieser Vektor liegt vorzugsweise in einer Ebene parallel zur Ober- oder Unterseite der zu besäumenden Grobbleche. Mit der im Anspruch 1 beanspruchten Verschiebung wird erfindungsgemäß zunächst sichergestellt, dass der Verschiebevektor zumindest eine Komponente quer zur Besäummesserebene aufweist. Damit ist nicht ausgeschlossen, dass der Verschiebevektor zusätzlich auch eine andere Komponente in einer anderen Richtung aufweisen kann, wie dies nachfolgend in den Unteransprüchen beansprucht wird. Anders ausgedrückt: Die erfindungsgemäß beanspruchte Verschiebung muss nicht zwangsläufig rein /ausschließlich quer zur Besäummesserebene erfolgen.

Der Begriff Besäummesserebene ist im Sinne der Erfindung gleichbedeutend zu verstehen mit den Begriffen Besäummesserkante, Saumebene, Ebene der Saumkante oder Ebene in Längsrichtung und senkrecht zur Oberseite des Grobblechs entlang der Saumkante.

Die beanspruchte Möglichkeit für den Anwender des Verfahrens zur variablen/flexiblen Anpassung des Abstandes zwischen dem Schrottobermesser und der Besäummesserebene und/oder des Abstandes zwischen dem Schrottuntermesser und der Besäummesserebene an die Dicke der jeweils zu besäumenden Grobbleche vor jedem Besäumvorgang bietet den Vorteil, dass Beschädigungen der besäumten Blechkante oder eine unzureichende Überdeckung des abzutrennenden Saumstreifen durch die Schneidkante des Schrottobermessers zumindest weitergehend ausbleiben.

Die Anpassung der Schrottmesserspaltweite an die Dicke des zu schneidenden Schrottstreifens bietet den Vorteil, dass die Standzeiten der Schrottmesser erhöht werden.

Der Begriff Schrottmesserebene ist im Sinne der Erfindung gleichzusetzen mit den Begriffen Schrottmesserkante oder Ebene senkrecht zur Oberseite und quer zur Längsrichtung des Grobblechs auf Höhe der Schrottmesser.

Die Schrottmesserschlittenführung steht mit mindestens einer vorzugsweise senkrecht zur Oberseite des Grobblechs angeordneten ortsfesten Exzenterwelle der Antriebseinrichtung derart in Wirkverbindung, dass bei einer Drehbewegung dieser Exzenterwelle die Schrottmesserschlittenführung gleichzeitig in zwei - zum Beispiel rechtwinklig zueinander verlaufenden - unterschiedlichen Richtungen verschoben wird, zum Beispiel in die Richtungen quer zur Besäummesserebene und quer zur Schrottmesserebene.

Durch eine entsprechende Ausbildung und Dimensionierung der Exzenterwelle ist wahlweise die gleichzeitige vorab einstellbare Erzeugung unterschiedlicher Verschiebelängen sowie Verschiebelängenverhältnisse möglich. Die Verschiebelängen entsprechen den Längen bzw. Beträgen der Komponenten des Verschiebevektors.

Die oben genannte Aufgabe wird weiterhin durch die Vorrichtung gemäß Anspruch 3 gelöst. Die Vorteile dieser Lösung entsprechen den oben mit Bezug auf das beanspruchte Verfahren genannten Vorteilen.

Weitere Einzelheiten, Merkmale und Vorteile der Erfindung werden nachfolgend anhand von in schematischen Zeichnungsfiguren dargestellten Ausführungsbeispielen näher erläutert. Es zeigen:
- Fig. 1a: Vorrichtung zum Besäumen von Blechen nach dem Stand der Technik;
- Fig. 1b: einen Horizontalschnitt durch eine Schrottmesserschlittenführung nach dem Stand der Technik,
- Fig. 2: einen Vertikalschnitt durch die Schrottmesserschlittenführung der Fig. 1 b),
- Fig. 3 bis 6: um 90° gegenüber der Fig. 2 gedrehte Horizontalschnitte,
- Fig. 7: einen Vertikalschnitt durch die Schrottmesserschlittenführung der Erfindung,
- Fig. 8 bis 11: Horizontalschnitte durch die Schrottmesserschlittenführung der Fig. 7,
- Fig. 12-15: jeweils eine Draufsicht und einen Vertikalschnitt durch die erfindungsgemäße Vorrichtung mit einem weiteren Ausführungsbeispiel für die Antriebseinrichtung und die Schrottmessereinrichtung.

In allen Figuren sind gleiche technische Merkmale mit gleichen Bezugszeichen bezeichnet.

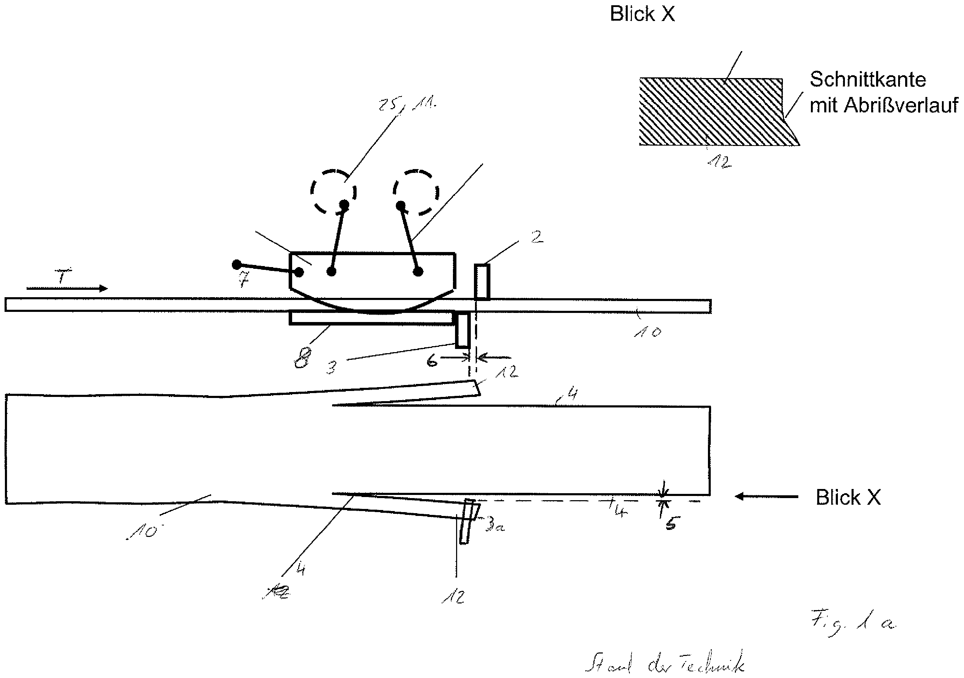

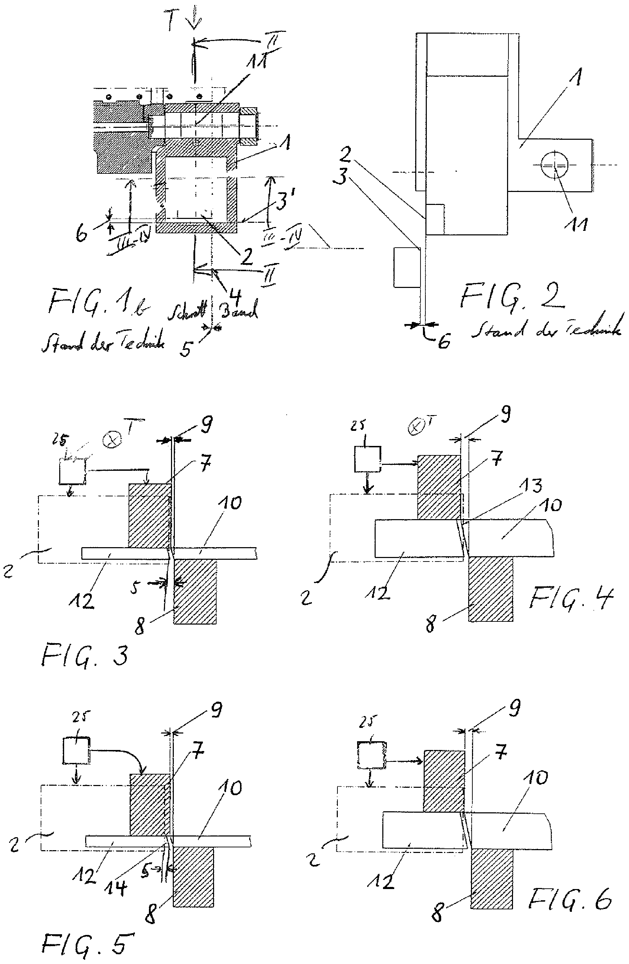

Die Figuren 1a und 1b zeigen verschiedene Ansichten/Schnitte einer Vorrichtung zum Besäumen von Blechen nach dem Stand der Technik. In Transportrichtung des Grobblechs gesehen, hinter den Besäummessern 7, 8 befinden sich senkrecht dazu die Schrottmesser (dargestellt sind das Schrottobermesser 2 und das Schrottuntermesser 3 mit der Schrottuntermesserkante 3). Das Schrottobermesser 2 ist an einem Schrottmesserschlitten, siehe Figur 1b, befestigt, welcher in der Schrottmesserschlittenführung 1 gehalten und geführt wird. Die Schrottmesserschlittenführung 1 ist an ihrer Unterseite auf einer horizontal liegenden Exzenterwelle 11 gelagert, durch deren Drehung die Schrottmesserspaltweite eingestellt werden kann.

Das Schrottobermesser 2 ist horizontal in einem gewissen konstanten Abstand 5 zum Besäummesser angeordnet, um sowohl Schrottstreifen von dicken Blechen 10 als auch von dünnen Blechen zu schneiden. In der Figur 1b sind die Schrottmesserspaltweite 6 und der Abstand 5 zwischen dem Schrottobermesser 2 und der Besäummesserkante 4 eingezeichnet. Je größer die Blechdicke desto größer sind auch die Schrottmesserspaltweite 6 und der Abstand 5 zwischen dem Schrottobermesser und dem Besäummesser zu wählen.

In der Figur 2 ist die Schrottmesserschlittenführung 1 der Fig. 1 in einem Vertikalschnitt dargestellt. Sie zeigt die Lage der Schrottmesser 2, 3 sowie der der horizontal liegenden Exzenterwelle 11 bezüglich der Schrottmesserschlittenführung 1.

In den Figuren 3 bis 6 sind gegenüber der Fig. 2 um 90° gedrehte Horizontalschnitte dargestellt. Durch die gedrehte Darstellung sind hier das Besäumobermesser 7 und das Besäumuntermesser 8 sowie die Besäummesserspaltweite 9 jeweils erkennbar.

In der Anordnung der Figur 3 können bei kleinem Abstand des Schrottobermessers zum Besäummesser und kleiner Besäummesserspaltweite 9 ohne Schwierigkeiten Schrottstreifen 12 von dünnem Grobblech 10 geschnitten werden.

Bei dickem Grobblech 10 mit entsprechend größerer Besäummesserspaltweite 9 erzeugt das Schrottobermesser 2 dagegen, wie in der Figur 4 dargestellt, eine unerwünschte Beschädigung 13 an der Saumkante des Grobblechs 10.

In der Figur 5 ist bei gleicher Besäummesserspaltweite 9 wie in der Fig. 3 der Abstand 5 zwischen dem Schrottobermesser 2 und dem Besäummesser vergrößert. Dies führt bei dünnem Grobblech 10 dazu, dass eventuell der Schrottstreifen 12 nicht komplett abgeschnitten wird und eine unvollständige Schnittstelle 14 aufweist.

In der Anordnung der Figur 6 können schließlich bei einer der Fig. 4 entsprechender vergrößerter Besäummesserspaltweite 9 und einem der Fig. 5 entsprechenden größeren Abstand zwischen dem Schrottobermesser 2 und dem Besäum-messer ohne Schwierigkeiten Schrottstreifen 12 von dickem Grobblech 10 geschnitten werden.

Zusammenfassend ist zu der in den Figuren 3 bis 6 dargestellten Technik festzuhalten, dass beim Übergang von der Verarbeitung dünner Grobbleche 10 mit der Einstellung der Fig. 3 zur Verarbeitung dicker Grobbleche 10 mit der Einstellung der Fig. 6 die Schrottmesserspaltweite 6 und der Abstand 5 zwischen dem Schrottobermesser 2 und der Besäummesserkante 4 vergrößert werden müssen und umgekehrt.

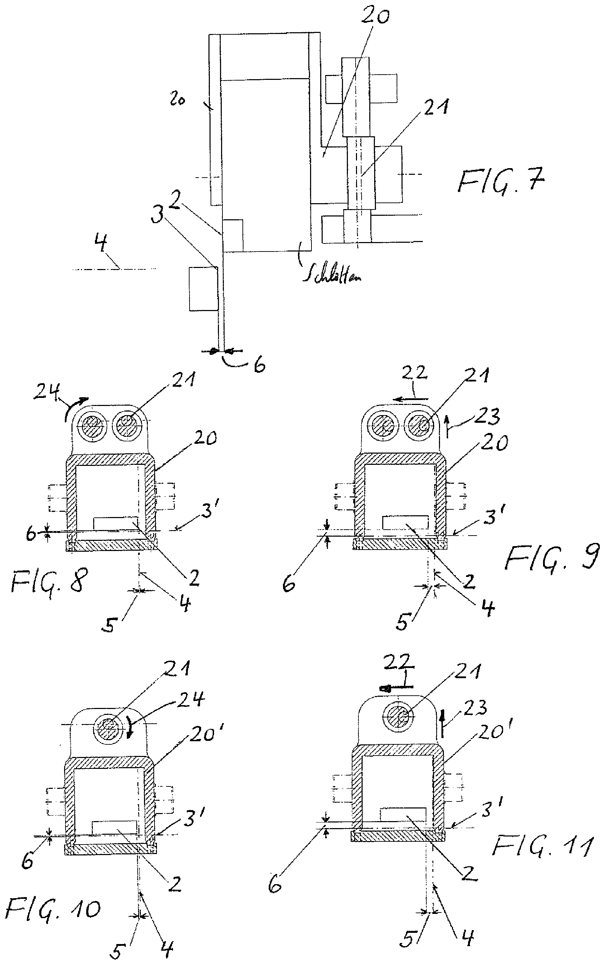

Diese in Abhängigkeit von der Blechdicke der Grobbleche 10 durchzuführenden Änderungen werden gemäß einem bevorzugten Ausführungsbeispiel der Erfindung mit Hilfe von mindestens einer vorzugsweise senkrecht angeordneten ortsfesten, aber drehbar gelagerten Exzenterwelle 21 durchgeführt, wie in den folgenden Figuren 7 bis 11 dargestellt ist.

Die Figur 7 zeigt in einem der Figur 2 entsprechenden Vertikalschnitt eine Schrottmesserschlittenführung 20 der Erfindung, bei der die Schrottmesserspaltweite 6 der Schrottmesser 2, 3 mittels einer senkrecht angeordneten Exzenterwelle 21 veränderbar ist. Die gleichzeitig durch die Exzenterwelle 21 vorgenommene Änderung des Abstandes 5 zwischen dem Schrottobermesser 2 und der Besäummesserkante 4 ist in der Figur 7 nicht zu sehen, wird aber in den folgenden, der Fig. 1 entsprechenden Horizontalschnitten der Figuren 8 bis 11 deutlich sichtbar.

In den Figuren 8 und 9 wird die Lagerung der Schrottmesserschlittenführung 20 durch zwei senkrecht stehende ortsfeste Exzenterwellen 21 übernommen. Für das Besäumen dünner Grobbleche 10 befindet sich in der dargestellten Stellung der Figur 8 der Drehpunkt der Exzenterwellen 21 in einer 12-Uhr-Stellung. Durch eine Verdrehung 24 der Exzenterwellen 21 in Uhrzeigerrichtung wurde die in der Figur 9 dargestellte 3-Uhr-Stellung erreicht, wobei die Schrottmesserschlittenführung 20 in Richtung 23 vom Schrottuntermesser bzw. dessen Schrottuntermesserkante 3' weg und gleichzeitig in Richtung 22 von der Besäummesserkante 4 weg bewegt wurde. Wie durch Gegenüberstellung der beiden Figuren 8 und 9 deutlich erkennbar ist, wurde durch die Verdrehung 24 also eine gleichzeitige Vergrößerung der Schrottmesserspaltweite 6 und des Abstandes 5 zwischen dem Schrottobermesser 2 und der Besäummesserkante 4 erreicht - eine Einstellung, die für das Besäumen dicker Grobbleche 10 vorteilhaft ist.

Die Verschiebung ist durch entsprechende Verdrehung der Exzenterwellen 21 in ihren Richtungen umkehrbar, wobei auch Zwischenstellungen möglich sind, so dass die Stellung der Schrottmesserschlittenführung 20 in einfacher, schneller und kostensparender Weise variabel an unterschiedliche Blechdicken angepasst werden kann.

In gleicher Weise wird diese beschriebene Verschiebung der Schrottmesserschlittenführung 20' auch mit nur einer Exzenterwelle 21 durch deren Verdrehung erreicht, wie beispielhaft in den Figuren 10 und 11 dargestellt ist.

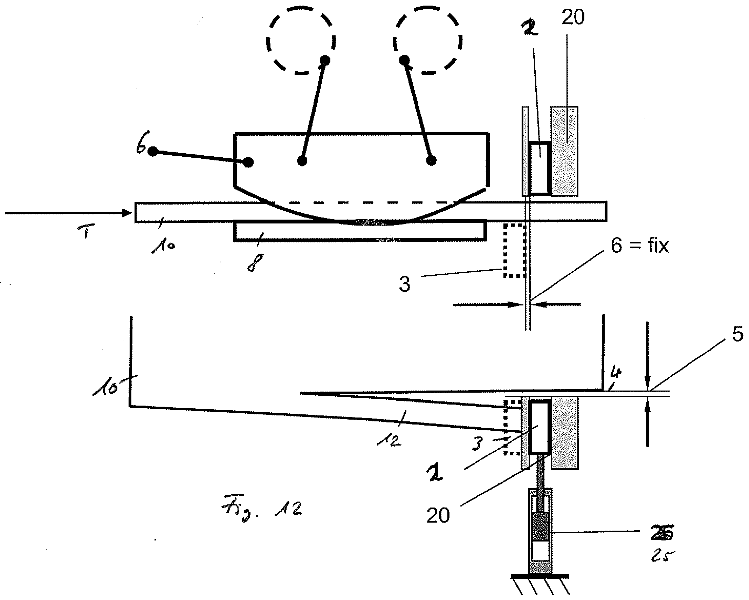

Figur 12 zeigt einen Vertikalschnitt und eine Draufsicht durch die erfindungsgemäße Vorrichtung, wobei die Antriebseinrichtung 25 für das Schrottobermesser 2 beispielhaft in Form einer Kolbenzylindereinheit ausgebildet ist. Die Antriebseinrichtung 25 ist so ausgerichtet, dass sie eine Verschiebung von beispielhaft dem Schrottobermesser 2 quer zur der Besäummesserebene 4 und damit eine Änderung des Abstandes 5 zwischen dem Schrottobermesser und der Besäummesserebene 4 bewirkt.

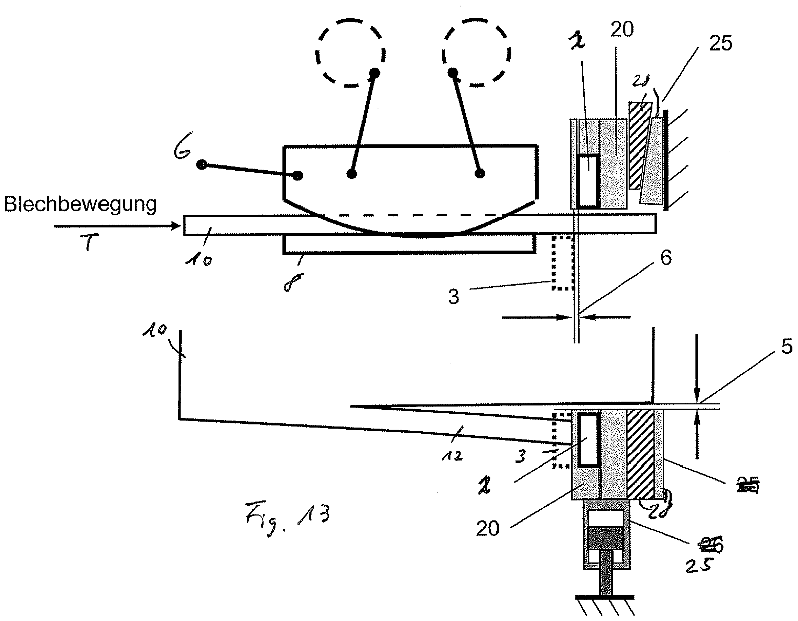

Figur 13 zeigt ein weiteres Ausführungsbeispiel für die erfindungsgemäße Antriebseinrichtung, wobei diese Antriebseinrichtung neben der Kolbenzylindereinheit auch eine Keilanstellung 28 aufweist zum Ändern der Schrottmesserspaltweite 6 in Abhängigkeit von der Dicke des zu besäumenden Grobblechs. Wie aus Figur 13 zu erkennen ist, bewirkt eine Verschiebung der Keilanstellung in einer Verschieberichtung quer zur Oberfläche des zu besäumenden Grobbleches die besagte Änderung der Schrottmesserspaltweite. Bei dem in Figur 13 gezeigten Ausführungsbeispiel bewirkt die Kolbenzylindereinheit nicht nur eine Verschiebung des Obermessers 2, sondern der gesamten Schlittenführung 20 mit dem Schlitten und der Keilanstellung 28, welche in Wirkverbindung mit der Schlittenführung steht und optional mit der Schlittenführung eine bauliche Einheit bildet.

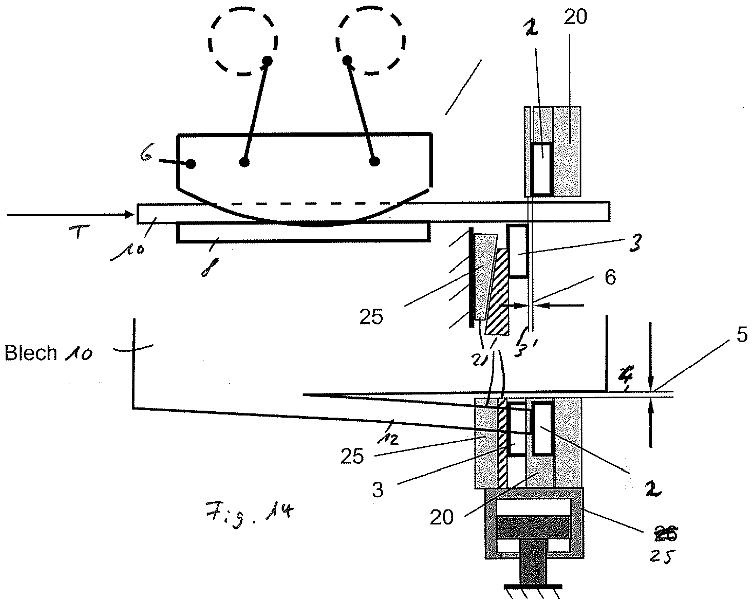

Figur 14 zeigt ein Ausführungsbeispiel für die Antriebseinrichtung 25, welche analog zur Figur 13 auf das Obermesser 2 einwirkt, im Unterschied zur Figur 13 jedoch auch eine Verschiebung des Untermessers quer zur Besäumebene bewirkt. Konstruktiv bedingt ermöglicht die Kolbenzylindereinheit eine gleichzeitige Verschiebung von Schrottobermesser und Schrottuntermesser. Die Keileinstellung 28 wirkt in Figur 14, im Unterschied zu Figur 13 nicht auf das Schrottobermesser, sondern auf das Schrottuntermesser. Sie ermöglicht eine Veränderung der Schrottmesserspaltweite 6 in Bezug auf die Schrottmesserführung mit dem Schlitten und dem Schrottobermesser, welche gemäß Figur 14 in oder entgegen der Transportrichtung ortsfest angeordnet sein kann. Die Kolbenzylindereinheit bewirkt vorzugsweise nicht nur eine Verschiebung des Schrottober- und des Schrottuntermessers in einer Richtung quer zur der Besäummesserebene, sondern vorzugsweise gleichzeitig auch eine Mitverschiebung der Keilanstellung 28.

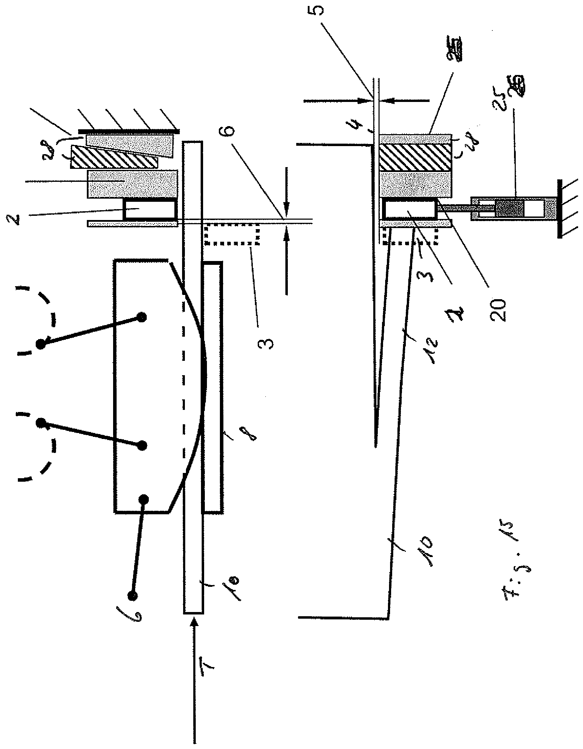

Figur 15 zeigt ein weiteres Ausführungsbeispiel für die Antriebseinrichtung 25, wobei die Kolbenzylindereinheit, genau wie in Figur 12 lediglich in Kraft-Wirkverbindung steht mit dem Schrottobermesser, und die zusätzlich vorhandene Keileinstellung 28 allerdings nicht in Wirkverbindung mit der KolbenZylindereinheit steht und deshalb auch nicht zusammen mit dem Schrottobermesser quer zur Besäummessereben 4 verschoben werden würde.

### Bezugszeichenliste

- 1: Schrottmesserschlittenführung nach Stand der Technik
- 2: Schrottobermesser
- 3: Schrottuntermesser
- 3': Schrottuntermesserkante, Schrottmesserebene
- 4: Besäummesserkante, Besäummesserebene
- 5: Abstand zwischen dem Schrottobermesser und der Besäummesserkante
- 6: Schrottmesserspaltweite
- 7: Besäumobermesser
- 8: Besäumuntermesser
- 9: Besäummesserspaltweite
- 10: Grobblech
- 11: horizontale Exzenterwelle
- 12: Schrottstreifen
- 13: Beschädigung
- 14: unvollständige Schnittstelle
- 20: Schrottmesserschlittenführung der Erfindung mit oder ohne zwei Exzenterwellen
- 20': Schrottmesserschlittenführung der Erfindung mit oder ohne einer Exzenterwelle
- 21: ortsfeste senkrecht stehende Exzenterwelle
- 22: Richtung der Abstandsänderung Schrottobermesser - Besäummesserkante
- 23: Richtung der Schrottmesserspaltweitenänderung
- 24: Verdrehung der Exzenterwelle
- 25: Antriebseinrichtung
- 28: Keilanstellung
- T: Transportrichtung

## Patentansprüche

1. Verfahren zum Besäumen von Grobblechen (10) mittels Grobblechscheren, welche Besäummesser (7, 8) aufweisen, die eine Besäummesserebene (4) aufspannen;
wobei die bei dem Besäumen entstehenden Schrottstreifen (12) durch eine - in Transportrichtung des Grobblechs gesehen - hinter den Besäummessern (7, 8) angeordnete Schrottmessereinrichtung mit einem Schrottobermesser und einem Schrottuntermesser in Schrottstücke zerteilt werden, und wobei das Schrottobermesser und das Schrottuntermesser eine Schrottmesserebene aufspannen,
**dadurch gekennzeichnet,**
**dass** der Abstand (5) zwischen dem Schrottobermesser und der Besäummesserebene und der Abstand zwischen dem Schrottuntermesser und der Besäummesserebene (4) vor einem jeweiligen Besäumvorgang in Abhängigkeit von der Dicke der jeweils zu besäumenden Grobbleche (10) eingestellt wird durch Verschieben von dem Schrottobermesser und dem Schrottuntermesser in einer Verschieberichtung mit zumindest einer Komponente quer zu der Besäummesserebene (4);
**dass** zusätzlich zu dem Abstand (5) zwischen dem Schrottobermesser und der Besäummesserebene (4) und dem Abstand (5) zwischen dem Schrottuntermesser und der Besäummesserebene (4) auch die Schrottmesserspaltweite (6) in Abhängigkeit von der Dicke der zu besäumenden Grobbleche (10) eingestellt wird durch Verschieben des Schrottobermessers und des Schrottuntermessers relativ zueinander in der Verschieberichtung mit einer weiteren Komponente quer zu der von den Schrottmessern aufgespannten Schrottmesserebene;
**dass** die Verschiebungen des Schrottobermessers und/oder des Schrottuntermessers quer zur Besäummesserebene (4) und quer zu der Schrottmesserebene gleichzeitig erfolgen;
**dass** das Schrottobermesser oder das Schrottuntermesser in einem Schlitten, welcher in einer Schrottmesserschlittenführung verschiebbar geführt ist, befestigt ist; und
**dass** die gleichzeitige Verschiebung des Schrottobermessers und des Schrottuntermessers quer zur Besäummesserebene und quer zur Schrottmesserebene durch Verdrehen von mindestens einer mit der Schrottmesserschlittenführung (20, 20') in Wirkverbindung stehenden Exzenterwelle (21) erfolgt.

2. Verfahren nach Anspruch 1, **dadurch gekennzeichnet, dass** das Verhältnis von der Verschiebelänge der Schrottmesserschlittenführung in Richtung quer zur Besäummesserebene (4) zu der Verschiebelänge der Schrottmesserschlittenführung in Richtung quer zur Schrottmesserebene (5) vor einem jeweiligen Besäumschnitt wahlweise individuell eingestellt wird.

3. Vorrichtung zur Besäumung von Grobblechen, mit
einer Grobblechschere mit Besäummessern (7, 8), welche eine Besäummesserebene aufspannen, zum Besäumen der Grobbleche; und
einer - in Transportrichtung des Grobblechs gesehen - hinter den Besäummessern (7, 8) angeordneten Schrottmessereinrichtung mit einem Schrottobermesser und einem Schrottuntermesser, welche eine Schrottmesserebene aufspannen, zum Zerteilen der beim Besäumen anfallenden Schrottstreifen in Schrottstücke;
**dadurch gekennzeichnet,**
**dass** eine Antriebseinrichtung vorgesehen ist zum Verschieben des Schrottobermessers und des Schrottuntermessers in einer Verschieberichtung mit zumindest einer Komponente quer zu der Besäummesserebene (4);
**dass** die Antriebseinrichtung weiterhin ausgebildet ist, das Schrottobermesser und das Schrottuntermesser relativ zueinander zu verschieben in der Verschieberichtung mit einer weiteren Komponente quer zu der von den Schrottmessern aufgespannten Schrottmesserebene;
**dass** die Schrottmessereinrichtung eine Schrottmesserführung aufweist in welcher ein Schrottmesserschlitten verschiebbar gelagert ist; wobei das Schrottobermesser oder das Schrottuntermesser in dem Schrottmesserschlitten befestigt ist; und
**dass** die Antriebseinrichtung mindestens eine Exzenterwelle (21) aufweist, die mit der Schrottmesserschlittenführung (20, 20') derart in Wirkverbindung steht, dass durch eine Verdrehung (24) der Exzenterwelle (21) die Schrottmesserschlittenführung (20, 20') - und damit das Schrottobermesser oder das Schrottuntermesser - gleichzeitig quer zur Besäummesserebene (4) und quer zur Schrottmesserebene verschiebbar ist.

4. Vorrichtung nach Anspruch 3, **dadurch gekennzeichnet, dass** die Schrottmesserschlittenführung (20) wahlweise mit unterschiedlich ausgebildeten und dimensionierten Exzenterwellen (21) zur Erzeugung unterschiedlicher Verschiebelängen sowie Verschiebelängenverhältnisse verbunden ist.

## Claims

1. Method of trimming heavy plates (10) by means of heavy-plate shears, which comprise trimming knives (7, 8) spanning a trimming knife plane (4),
wherein the scrap strips (12) arising during the trimming are cut up into pieces of scrap by a scrap knife device, which is arranged behind the trimming knives (7, 8) as seen in transport direction of the heavy plate, with a scrap upper knife and a scrap lower knife and wherein the scrap upper knife and the scrap lower knife span a scrap knife plane, **characterised in that**
the spacing (5) between the scrap upper knife and the trimming knife plane and the spacing between the scrap lower knife and the trimming knife plane (4) are set prior to a respective trimming process and in dependence on the thickness of the respective heavy plate (10), which is to be trimmed, by displacement of the scrap upper knife and the scrap lower knife in a displacement direction with at least one component transverse to the trimming knife plane (4);
in addition to the spacing (5) between the scrap upper knife and the trimming knife plane (4) and the spacing (5) between the scrap lower knife and the trimming knife plane (4) the scrap knife gap width (6) is also set in dependence on the thickness of the heavy plate (10), which is to be trimmed, by displacing the scrap upper knife and the scrap lower knife relative to one another in the displacement direction with a further component transverse to the scrap knife plane spanned by the scrap knives,
the displacements of the scrap upper knife and/or the scrap lower knife are carried out simultaneously transversely to the trimming knife plane (4) and transversely to the scrap knife plane,
the scrap upper knife or the scrap lower knife is fastened in a slide guided to be displaceable in a scrap knife slide guide, and
the simultaneous displacement of the scrap upper knife and the scrap lower knife transversely to the trimming knife plane and transversely to the scrap knife plane is carried by rotation of at least one eccentric shaft (21) disposed in operative connection with the scrap knife slide guide (20, 20').

2. Method according to claim 1, **characterised in that** the ratio of the displacement length of the scrap knife slide guide in a direction transverse to the trimming knife plane (4) to the displacement length of the scrap knife slide guide in the direction transverse to the scrap knife plane (5) is selectably individually set prior to each trimming cut.

3. Device for trimming heavy plates, comprising
heavy plate shears with trimming knives (7, 8), which span a trimming knife plane, for trimming the heavy plate, and
a scrap knife device, which is arranged behind the trimming knives (7, 8) as seen in transport direction of the heavy plate, with a scrap upper knife and a scrap lower knife, which span a scrap knife plane, for cutting up into scrap pieces the scrap strips arising during the trimming,
**characterised in that**
a drive device for displacing the scrap upper knife and the scrap lower knife in a displacement direction with at least one component transverse to the trimming knife plane (4) is provided,
the drive device is further constructed to displace the scrap upper knife and the scrap lower knife relative to one another in the displacement direction with a further component transverse to the scrap knife plane spanned by the scrap knives,
the scrap knife device comprises a scrap knife guide in which a scrap knife slide is mounted to be displaceable, wherein the scrap upper knife or the scrap lower knife is fastened in the scrap knife slide, and
the drive device comprises at least one eccentric shaft (21) which is so disposed in operative connection with the scrap knife slide guide (20, 20') that through a rotation (24) of the eccentric shaft (21) the scrap knife slide guide (20, 20') and thus the scrap upper knife or the scrap lower knife are displaceable transversely to the trimming knife plane (4) and transversely to the scrap knife plane.

4. Device according to claim 3, **characterised in that** the scrap knife slide guide (20) is selectably connected with differently constructed and dimensioned eccentric shafts (21) for generating different displacement lengths and displacement length ratios.

## Revendications

1. Procédé pour le rognage de tôles fortes (10) au moyen de cisailles pour tôles fortes qui présentent des lames de rognage (7, 8) qui définissent un plan de lames de rognage (4) ;
dans lequel les bandes de ferrailles (12) que l'on obtient lors du rognage sont découpées pour obtenir des fragments de ferrailles via un mécanisme sous la forme de lames pour les ferrailles, disposé - lorsqu'on regarde dans la direction de transport de la tôle forte - derrière les lames de rognage (7, 8), comprenant une lame supérieure pour les ferrailles et une lame inférieure pour les ferrailles ; et dans lequel la lame supérieure pour les ferrailles et la lame inférieure pour les ferrailles définissent un plan de lames pour les ferrailles ; **caractérisé en ce qu'**on règle la distance (5) entre la lame supérieure pour les ferrailles et le plan des lames de rognage et la distance entre la lame inférieure pour les ferrailles et le plan des lames de rognage (4), avant un processus respectif de rognage en fonction de l'épaisseur de la tôle forte respectivement à rogner (10), via un déplacement de la lame supérieure pour les ferrailles et de la lame inférieure pour les ferrailles dans une direction de déplacement comprenant au moins une composante s'étendant en direction transversale par rapport au plan des lamés de rognage (4) ; **en ce qu'**en plus de la distance (5) entre la lame supérieure pour les ferrailles et le plan des lames de rognage (4) et la distance (5) entre la lame inférieure pour les ferrailles et le plan des lames de rognage (4), on règle également la largeur de la fente (6) des lames pour les ferrailles en fonction de l'épaisseur de la tôle forte à rogner (10), via un déplacement de la lame supérieure pour les ferrailles et de la lame inférieure pour les ferrailles l'une par rapport à l'autre dans la direction de déplacement comprenant au moins une composante supplémentaire s'étendant en direction transversale par rapport au plan des lames pour les ferrailles défini par les lames pour les ferrailles ;
**en ce que** les déplacements de la lame supérieure pour les ferrailles et/ou de la lame inférieure pour les ferrailles transversalement par rapport au plan des lames de rognage (4) et transversalement par rapport au plan des lames pour les ferrailles ont lieu de manière simultanée ;
**en ce que** la lame supérieure pour les ferrailles ou la lame inférieure pour les ferrailles est fixée dans un chariot qui est guidé en coulissement dans un guidage pour le chariot destiné aux lames pour les ferrailles ; et
**en ce que** le déplacement simultané de la lame supérieure pour les ferrailles et de la lame inférieure pour les ferrailles a lieu en direction transversale par rapport au plan des lames de rognage et en direction transversale par rapport au plan des lames pour les ferrailles par la mise en rotation d'au moins un arbre d'excentrique (21) mis en liaison opérationnelle avec le guidage pour le chariot destiné aux lames pour les ferrailles (20, 20').

2. Procédé selon la revendication 1, **caractérisé en ce qu'**on règle le rapport de la longueur de déplacement du guidage pour le chariot destiné aux lames pour les ferrailles dans la direction transversale par rapport au plan des lames de rognage (4) à la longueur de déplacement du guidage pour le chariot destiné aux lames pour les ferrailles dans la direction transversale par rapport au plan des lames pour les ferrailles (5) de façon individuelle comme on le souhaite devant un morceau rogné respectif.

3. Dispositif pour le rognage de tôles fortes, comprenant :
une cisaille pour tôles fortes comprenant des lames de rognage (7, 8) qui définissent un plan de lames de rognage, pour le rognage des tôles fortes ; et un mécanisme sous la forme de lames pour les ferrailles, disposé - lorsqu'on regarde dans la direction de transport de la tôle forte - derrière les lames de rognage (7, 8), comprenant une lame supérieure pour les ferrailles et une lame inférieure pour les ferrailles, qui définissent un plan des lames pour les ferrailles, pour la découpe des bandes de ferrailles que l'on obtient lors du rognage dans le but d'obtenir des fragments de ferrailles ; **caractérisé en ce qu'**on prévoit un dispositif d'entraînement pour le déplacement de la lame supérieure pour les ferrailles et de la lame inférieure pour les ferrailles dans une direction de déplacement comprenant au moins une composante s'étendant en direction transversale par rapport au plan des lames de rognage (4) ; **en ce que** le mécanisme d'entraînement est en outre réalisé pour déplacer la lame supérieure pour les ferrailles et la lame inférieure pour les ferrailles l'une par rapport à l'autre dans la direction de déplacement une composante supplémentaire s'étendant en direction transversale par rapport au plan des lames pour les ferrailles défini par les lames pour les ferrailles ;
**en ce que** le mécanisme sous la forme de lames pour les ferrailles présente un guidage destiné aux lames pour les ferrailles dans lequel est monté en coulissement un chariot destiné aux lames pour les ferrailles ; dans lequel la lame supérieure pour les ferrailles ou la lame inférieure pour les ferrailles est fixée dans le chariot destiné aux lames pour les ferrailles ; et
le mécanisme d'entraînement présente au moins un arbre d'excentrique (21) qui est mis en liaison opérationnelle avec le guidage destiné au chariot pour les lames pour les ferrailles (20, 20') d'une manière telle que, via une rotation (24) de l'arbre d'excentrique (21), on peut déplacer le guidage destiné au chariot pour les lames pour les ferrailles (20, 20') - et par conséquent également la lame supérieure pour les ferrailles ou la lame inférieure pour les ferrailles - de manière simultanée en direction transversale par rapport au plan des lames de rognage (4) et en direction transversale par rapport au plan des lames pour les ferrailles.

4. Dispositif selon la revendication 3, **caractérisé en ce que** le guidage destiné au chariot pour les lames pour les ferrailles (20) est relié comme on le souhaite à des arbres d'excentriques (21) de réalisations et de dimensions différentes pour générer des longueurs de déplacements différentes et des rapports de longueurs de déplacements différents.
